# FASCICULE DE BREVET EUROPEEN

(11) **EP 0 493 992 B1**
(45) Date de publication et mention de la délivrance du brevet: **10.07.1996**
(21) Numéro de dépôt: 91403289.1
(22) Date de dépôt: 05.12.1991
(51) Int. Cl.: F16D 25/12, F16D 25/08

(54) **Actionneur pour la commande d'un embrayage à friction doté d'un diaphragme, notamment pour véhicule automobile**
Betätiger einer Reibungskupplung mit einer Membranfeder, insbesondere für Kraftfahrzeuge
Control actuator of a friction clutch with a diaphragm, especially for a motor vehicle

(30) Priorité: 07.12.1990 FR 9015359
(43) Date de publication de la demande: 08.07.1992
(73) Titulaire: VALEO, 75848 Paris Cédex 17 (FR)
(72) Inventeur: Delin, Claude, F-93500 Pantin (FR); Ledamoisel, Claude, F-95550 Bessancourt (FR); Michel, Robert, F-95540 Méry-Sur-Oise (FR); Randriazanamparany, Vévé Roland, F-92500 Rueil-Malmaison (FR)
(74) Mandataire: Gamonal, Didier

(56) Documents cités:
- EP-A- 0 386 330
- DE-A- 2 124 948
- FR-A- 2 136 847
- FR-A- 2 612 464

## Description

La présente invention concerne un actionneur pour la commande d'un embrayage à friction doté d'un diaphragme, notamment pour véhicule automobile, dont l'état est modifié entre une position embrayage engagé et une position embrayage désengagé par l'intermédiaire de l'actionneur actionnant une timonerie propre à agir sur le dispositif débrayeur de l'embrayage, actionneur du genre comportant des moyens de liaison en deux parties, dont une est associée à la timonerie et l'autre à l'actionneur.

Un tel actionneur est décrit dans le document FR-A-2 559 562 et permet de bénéficier non seulement d'une commande motorisée mais également d'un fonctionnement irréprochable quel que soit l'état d'usure des garnitures de friction que comporte l'embrayage et ceci avec une construction très simple et surtout un mouvement minimum pour les moyens de manoeuvre.

En effet, les moyens de liaison appartiennent à un rattrapeur d'usure et cette disposition fait appel à des moyens avec deux parties normalement encliquetées l'une avec l'autre et donne satisfaction, mais ne permet pas d'effectuer un rattrapage d'usure de manière continue.

Lorsque les moyens de manoeuvre ou actionneurs sont du type à fluide et comportent un piston principal et un cylindre principal définissant une chambre de commande, cette susmentionnée disposition est difficile à mettre en oeuvre au sein de l'actionneur.

En outre, le déplacement de la timonerie est alors fonction de la pression régnant dans la chambre de commande.

Dans le document DE-A-21 24 948 conforme au préambule de la revendication 1 il est prévu pour rattraper les usures de loger un piston secondaire au sein d'un piston principal avec intervention d'un obturateur. Le ressort d'embrayage est du type ressort à boudins. Cette solution est gênante dans le cadre d'un embrayage à diaphragme avec une courbe caractéristique présentant un ensellement. En effet, pour une même pression, il peut correspondre diverses positions de l'embrayage, en sorte que l'embrayage n'est pas manoeuvré de manière biunivoque.

Il est donc souhaitable que l'embrayage soit manoeuvré de manière biunivoque, c'est-à-dire que pour une pression de commande il ne corresponde qu'une position de l'embrayage.

La présente invention a pour objet de pallier ces inconvénients, et de créer, dans le cadre d'un actionneur à fluide, un nouveau rattrapeur d'usure à action continue monté au sein de l'actionneur, tout en tirant parti dudit rattrapeur pour manoeuvrer de manière biunivoque l'embrayage.

Suivant l'invention, ce problème est résolu par la partie caractérisante de la revendication 1.

Grâce à l'invention, un rattrapage d'usure continu est possible et la disposition est compacte, puisque le piston secondaire est logé au sein du piston principal. En outre, la course du piston secondaire de l'actionneur est minimale, compte tenu du rattrapeur d'usure et la charge des moyens élastiques de désensellement en combinaison avec les moyens d'entraînement à jeu permet d'avoir une courbe caractéristique au niveau de la timonerie constamment croissante quel que soit le degré d'usure, ledit jeu et lesdits moyens élastiques de désensellement étant dimensionnés en fonction de la courbe caractéristique du diaphragme de l'embrayage.

Cette disposition ouvre de grandes possibilités notamment, lorsque l'actionneur comporte une électrovalve programmée pour accomplir l'opération de débrayage-embrayage par commande du piston principal, ladite valve travaillant par commande en effort. A une charge donnée correspond alors une seule position de la timonerie grâce à l'invention. Cette électrovalve permet de réduire transversalement la taille de l'actionneur par rapport aux dispositions décrites par exemple dans le document DE-A-2124948.

Selon une autre caractéristique, on prévoit des moyens élastiques de rappel, en combinaison avec une butée portée par le cylindre principal, pour en position embrayage engagé ouvrir en toute certitude l'obturateur. Ces moyens élastiques de rappel ont une charge inférieure à celle des moyens élastiques de désensellement et peuvent être montés en série ou en parallèle, par rapport à ceux-ci.

Suivant une autre caractéristique, pour formation des moyens d'entraînement à jeu, il est prévu une pièce de transfert entraînée à translation par le piston principal, l'équipage mobile piston principal-piston secondaire étant propre à actionner les moyens élastiques de désensellement par l'intermédiaire de la pièce de transfert après une course déterminée.

Dans une forme de réalisation, la pièce de transfert sert d'appui aux moyens élastiques de désensellement et porte une pièce d'appui, lesdits moyens élastiques de désensellement et de rappel étant alors montés en série, tandis que dans une autre forme de réalisation ladite pièce de transfert sert d'appui aux moyens élastiques de rappel, tandis que la pièce d'appui, éventuellement monobloc avec la pièce de transfert, sert d'appui aux moyens élastiques de désensellement montés alors en parallèles par rapport aux moyens élastiques de rappel.

On appréciera que dans tous les cas les moyens élastiques de désensellement peuvent avoir une charge minimale compte tenu du diaphragme, grâce au rattrapeur d'usure et aux moyens d'entraînement à jeu selon l'invention.

La description qui va suivre illustre l'invention en référence aux dessins annexés dans lesquels :
- la figure 1 est un diagramme schématique de la commande d'embrayage ;
- la figure 2 est une vue schématique de l'embrayage avec sa commande selon le diagramme de la figure 1 ;
- la figure 3 est une vue en élévation d'un diaphragme ;
- la figure 4 est un diagramme montrant les courbes caractéristiques des efforts au niveau de la butée de débrayage, en fonction de la course de débrayage ;
- la figure 5 est une vue en coupe axiale des moyens de manoeuvre à fluide dotés d'un rattrapeur d'usure selon l'invention ;
- la figure 6 est une vue analogue à la figure 5 pour un second exemple de réalisation ;
- la figure 7 est une vue schématique de l'actionneur pour ce second exemple de réalisation ;
- la figure 8 est la courbe caractéristique de la pression de l'électrovalve en fonction de la période d'ouverture de l'électrovalve ;
- la figure 9 est la courbe caractéristique de la pression délivrée par l'électrovalve en fonction du rapport cyclique de commande de l'électrovalve ;
- la figure 10 est une vue schématique de l'électrovalve.
- la figure 11 est une vue schématique en coupe de l'actionneur pour un troisième exemple de réalisation ;
- la figure 12 est une vue en coupe selon la ligne 12-12 de la figure 11.

Tel qu'illustré dans les figures, la commande d'un embrayage à friction 10 pour véhicule automobile comporte un circuit hydraulique 50, une source de pression 40, un module de commande à fluide 30 ou actionneur à fluide, une timonerie 20 propre à agir sur le dispositif débrayeur 7 de l'embrayage 10.

Plus précisément, l'embrayage 10 comporte ici un plateau de réaction 3 solidaire en rotation du vilebrequin 1 du moteur M, un plateau de pression 5, un couvercle 6, un diaphragme 7.

Le couvercle 6 est propre à être fixé par des vis (non représentées) sur le plateau de réaction 3 et est solidaire en rotation du plateau de pression 5 monté mobile axialement par rapport à celui-ci, par exemple à l'aide de languettes tangentielles, ou en variante par une liaison du type tenon-mortaise.

Le diaphragme 7 prend appui sur le couvercle 6 et sollicite le plateau de pression 5 en direction du plateau de réaction 3 pour serrage entre ceux-ci des garnitures de friction d'une friction d'embrayage 4 solidaire en rotation de l'arbre d'entrée 2 de la boîte de vitesses BV.

Le diaphragme 7 comporte une partie périphérique 13, formant rondelle Belleville, prolongée radialement vers l'intérieur par des doigts radiaux 14 séparés par des fentes 11, qui débouchent dans une ouverture centrale 12 du diaphragme. Sur les extrémités des doigts 14 est propre à agir une butée de débrayage 8 appartenant à la timonerie 20, qui comporte ici une tige 21 montée à articulation à l'extrémité supérieure d'une fourchette de débrayage 22 montée à articulation sur le carter d'embrayage pour action à son extrémité interne sur la butée de débrayage 8.

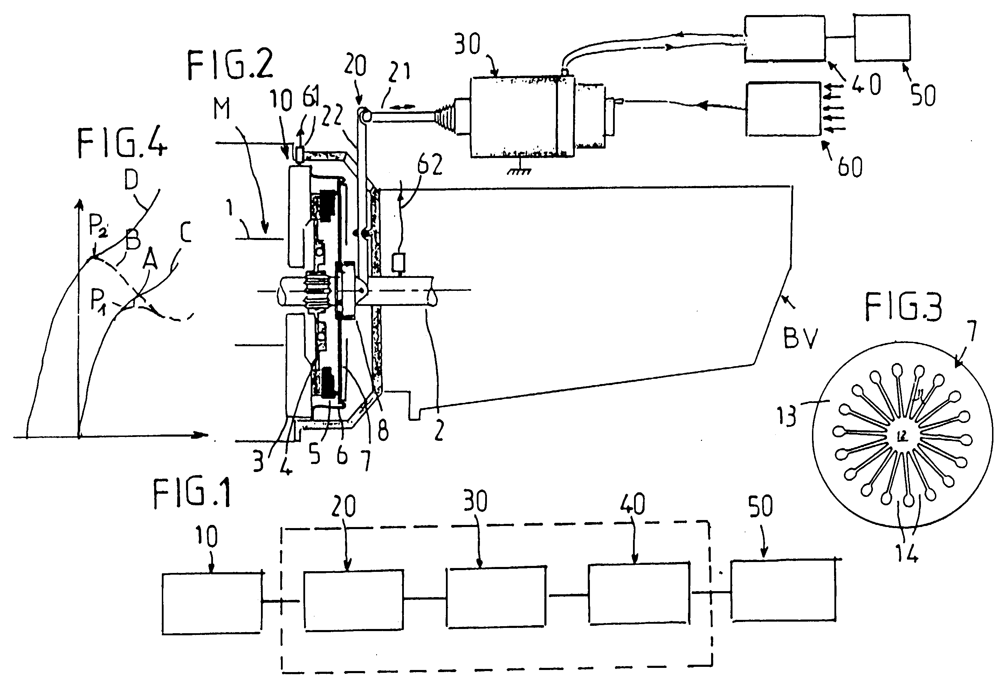

Pour mémoire la courbe caractéristique du diaphragme 7, donc celle au niveau de la butée 8, présente un ensellement (voir les courbes A et B en pointillés de la figure 4).

Normalement lorsque l'embrayage est en position embrayage engagé les garnitures de friction de la friction d'embrayage 4 sont pincées entre les plateaux 5 3 pour transmission du mouvement de l'arbre menant 1 à l'arbre mené 2.

Pour débrayer l'embrayage, il suffit d'agir sur les extrémités des doigts 14 pour faire pivoter le diaphragme 7 afin de desserrer les garnitures de friction de ladite friction 4, qui se trouve alors en position embrayage désengagé, le diaphragme 7 appartenant au dispositif débrayeur de l'embrayage.

Le montage peut être du type poussé, dans ce cas, la butée 8 agit en poussée sur le diaphragme 7 qui est monté de manière basculante sur le couvercle 6, soit du type tiré dans ce cas la butée agissant par traction sur le diaphragme 7 qui s'appuie alors par sa périphérie externe sur le couvercle 6.

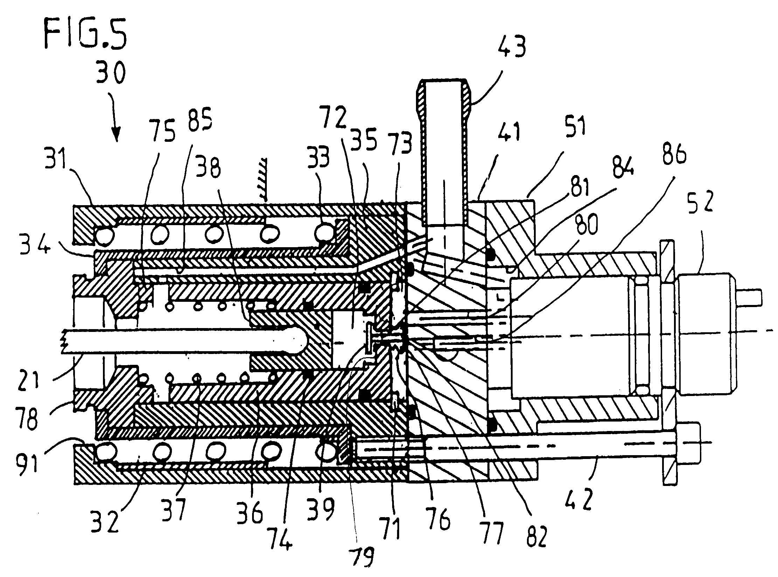

Ici l'actionneur 30 est suivant une caractéristique importante de l'invention du type électro-hydraulique pour la manoeuvre automatique de l'embrayage et comporte une électrovalve 52 (figure 5) reliée à une unité de traitement des informations et de commande 60. Cette unité 60, ici sous forme de calculateur électronique, reçoit des informations provenant de capteurs, par exemple un capteur 61 de vitesse de rotation de l'arbre menant, un capteur 62 de vitesse de rotation de l'arbre mené, un capteur de position de la pédale d'accélérateur, un capteur de position du papillon du carburateur, un capteur du rapport engagé de la boîte de vitesses et un capteur associé au levier de changement de vitesses.

A partir des informations qu'il reçoit des susmentionnés capteurs, ledit calculateur, programmé en conséquence, envoie une information de commande à l'électrovalve 52 pour faire varier la pression dans la chambre de commande 73, que comporte ledit actionneur 30. L'actionneur 30, constituant les moyens de manoeuvre pour l'embrayage, comporte également un cylindre principal 35 et un piston principal 36 définissant ladite chambre de commande 73.

L'actionneur 30 actionne ici automatiquement grâce au calculateur 60, la timonerie 20 pour modifier l'état de l'embrayage 10 entre sa position embrayage engagé et sa position embrayage désengagé et vice versa. Un rattrapeur d'usure est prévu au sein de l'actionneur pour la commande de l'embrayage 10, ledit rattrapeur comporte des moyens de liaison 36,72,38 en deux parties, dont une est associée à la timonerie 20, et l'autre à l'actionneur 30.

Dans cet actionneur à fluide du type sus-indiqué lesdits moyens de liaison 36,72,38 sont en relation de cylindre 36 - piston 38 définissant une chambre de rattrapage d'usure 72, la première desdites parties comportant un piston secondaire 38 relié à la timonerie 20, tandis que la seconde desdites parties comporte un cylindre 36 formant le piston principal des moyens de manoeuvre 30. Le piston principal 36 porte un obturateur 39 propre à établir une communication entre la chambre de commande 73 et la chambre de rattrapage d'usure 72, lorsque l'embrayage est en position embrayage engagé. Suivant une caractéristique de l'invention, ledit actionneur à fluide porte des moyens élastiques de désensellement associés au diaphragme, avec intervention de moyens d'entraînement à jeu entre lesdits moyens élastiques de désensellement et l'équipage mobile piston principal 36-piston secondaire 38.

Ici, les pistons 36,38 et le cylindre 35 sont de formes annulaires, et il en est de même de l'actionneur 30. Le piston secondaire 38 présente un trou borgne avec un fond en forme de demi-sphère pour réception de la tige 21 attelée à la fourchette 22. Ce piston 38 est donc relié à la tige 21 de la timonerie 20.

L'actionneur 30 comporte des parties fixes 31,35,41,51 décrites ci-après et propres à être fixées à une partie fixe du véhicule. Il est prévu en outre des joints d'étanchéité représentés en sombre à la figure 5 et dont l'un d'entre eux est référencé en 74 dans cette figure.

Plus précisément, le cylindre principal 35 porte, d'une part, à son extrémité avant une pièce d'appui coulissante 78, et d'autre part, dans son alésage interne une butée 71. La butée consiste ici en un circlips 71 engagé dans une gorge du cylindre 35 au voisinage de son fond 41.

Des moyens élastiques de rappel 37 sont propre à prendre appui sur ladite pièce d'appui 78 et sur le piston principal 36, pour solliciter celui-ci en direction de ladite butée 71 et ouverture de l'obturateur 39 en position embrayage engagé. Les moyens élastiques de rappel 37 consistent ici en un ressort à boudin monté dans l'alésage interne du piston 36 en étant centré par une saillie 75 de la pièce d'appui 78. Cette saillie 75 est propre à coopérer à centrage avec l'alésage interne du cylindre 35.

Ici, l'alésage interne du piston 36 est étagé et comporte au voisinage de son fond 79 une portion de diamètre réduit pour montage à étanchéité du piston secondaire 38 et une portion de diamètre supérieur pour réception du ressort 37, dont une extrémité prend appui sur l'épaulement formé au raccordement des deuxdites portions du piston 36. L'autre extrémité du ressort 37 prend appui sur la pièce 78. Cette pièce 78 est montée coulissante par rapport au cylindre principal 35 par l'intermédiaire d'une pièce de transfert 34. Cette pièce de transfert est de forme annulaire et est engagée à coulissement sur la périphérie externe du cylindre 35 de forme annulaire. La pièce de transfert 34 est donc portée par le cylindre principal 35.

Le cylindre 35 possède une base élargie en forme de collerette, cette base étant liée par vissage (vis 42) à un corps d'alimentation 41 et un réceptacle 51. Les vis 42 assemblant ces trois constituants.

Ainsi qu'on l'aura compris, le corps 41 constitue le fond du cylindre principal 35, ledit corps étant doté de canaux pour alimentation de la chambre de commande 73 et retour à la bâche ou réservoir, dont on voit en 43 la tuyauterie de retour. Plus précisément l'une des canalisations, à savoir la canalisation d'arrivée 86 est en relation avec l'électrovalve montée dans le réceptacle 51.

Cette électrovalve 52 est apte à mettre en communication la canalisation 86 avec une canalisation 80 pour alimentation en pression de la chambre de commande 73.

De manière connue en soi, cette électrovalve est à trois voies et comporte un noyau en matériau ferromagnétique entouré par une bobine électrique ou solénoïde relié lui-même au calculateur 60, ladite bobine étant entourée par une virole en matériau magnétique. Une soupape mobile sous l'action du champ magnétique est déplaçable sous l'action du champ magnétique créé par la bobine pour obturer un siège mettant en correspondance la canalisation d'arrivée de fluide 86 avec la canalisation 80 débouchant dans la chambre de commande 73.

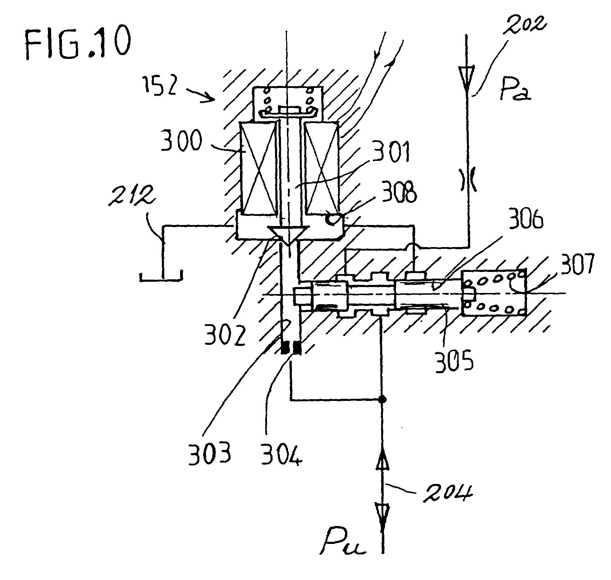

Cette électrovalve 52 comporte également en son sein un canal de transfert (voir figure 10 référence 303) permettant un retour au réservoir par un passage périphérique 84 en relation avec la tuyauterie 43.

Ici le fluide de commande est un fluide hydraulique provenant de l'assistance de direction pour définir une source hydraulique d'assistance 40 alimentant l'actionneur 30.

Bien entendu au lieu d'utiliser comme source hydraulique l'assistance de direction, on peut utiliser une centrale spécifique. Quoiqu'il en soit l'électrovalve 52 est ici une électrovalve proportionnelle qui est un réducteur de pression et qui régule la pression d'utilisation proportionnellement au courant de commande élaboré par le calculateur 60. La valve travaille en commandant en effort, c'est-à-dire qu'à une charge donnée correspond, grâce à l'invention, une position du piston secondaire 38 et de la timonerie 20. En variante, le fluide peut être de l'air comprimé.

On notera que l'électrovalve 52 est positionnée ici à proximité de la fourchette 22 pour limiter le temps de réponse et être d'une adaptation aisée sur tous véhicules.

La base élargie du cylindre 35 sert d'épaulement à la pièce de transfert 34 qui est de forme tubulaire avec, à chacune de ses extrémités, une collerette radiale dirigée respectivement vers l'extérieur pour contact avec la base du cylindre 35 et vers l'intérieur pour assemblage avec la pièce 78 par sertissage.

Les moyens élastiques de désensellement 33 prennent appui, d'une part, sur la collerette de la pièce de transfert 34 adjacente à la base du cylindre 35, et d'autre part, sur un épaulement 91 que présente une enveloppe tubulaire 31 solidaire de la base du cylindre 35 et donc du corps 41 et du réceptacle 51.

Ces moyens 33 sont ici portés par l'actionneur 30 à la faveur de l'enveloppe tubulaire 31 de celui-ci épaulée en 91. Ces moyens 33 entourent les moyens 37.

Ici, les moyens 33 consistent en un ressort à boudin et l'épaulement 91 de la pièce 31 en un rebord que celle-ci présente à son extrémité avant, ledit rebord étant dirigé vers l'axe de l'ensemble. L'enveloppe 31 porte une butée définie à la faveur d'une bague 32 emmanchée sur ladite enveloppe 31.

Bien entendu le ressort de désensellement 33 peut consister en une pluralité de rondelles Belleville. Quoiqu'il en soit, ce ressort est prévu pour avoir une charge à la butée d'abord croissante jusqu'au sommet des courbes de la figure 4 (point P1 ou P2), puis une charge légèrement croissante. Ce ressort intervient donc en différé, et c'est pour cette raison que la pièce 78 est dotée de la saillie 75. Cette saillie définissant une première course matérialisée par la distance séparant la butée 75 de l'extrémité avant du piston secondaire 36.

Ainsi l'équipage piston principal 36-piston secondaire 38 en combinaison avec la pièce d'appui 78 appartient aux moyens d'entraînement à jeu intervenant selon l'invention, entre ledit équipage et lesdits moyens élastiques de désensellement 33 portés par l'actionneur 30, la pièce de transfert 34 étant entraînée à translation par le piston principal pour actionner les moyens élastiques de désensellement après une course déterminée dudit équipage.

A la figure 4, la courbe A en pointillés correspond à la courbe caractéristique de l'ensellement de la butée 4 et donc du diaphragme 7, lorsque la friction est neuve et la courbe B en pointillés à la courbe caractéristique de l'ensellement de la butée lorsque la friction est usée avec en ordonnée la charge de la butée et en abscisse la courbe de la butée.

Comme on le voit sur cette figure, grâce aux moyens élastiques de désensellement, on obtient respectivement les courbes C et D sans ensellement au-delà respectivement des points P1 ou P2 où la charge est maximum au lieu des courbes A et B. La courbe caractéristique de commande de l'embrayage est donc biunivoque à une pression correspondant à une position unique de débrayage 8.

Bien entendu en choisissant le jeu entre le piston 36 et la pièce d'appui 78, ainsi qu'en choisissant la charge du ressort 33, on s'arrange pour faire intervenir ledit ressort 33 au point P1 ou P2 tout en ayant une courbe caractéristique toujours croissante, quelle que soit l'usure des garnitures de la friction 4.

L'obturateur 39 consiste ici en une soupape avec une tête propre à coopérer avec un siège porté par le fond 79 du piston 36 (la face de celui-ci tournée vers la chambre 72) et une queue 82 traversant une ouverture 81 prévue à cet effet dans ledit fond 79, ladite queue 82 portant, après traversée dudit fond, une coupelle 77 soumise à l'action d'un second moyen élastique de rappel 76 prenant appui sur la face du fond délimitant la chambre de commande 73 et sur ladite coupelle 77. Cette coupelle est propre à prendre appui sur le corps 41.

On notera qu'un canal de retour de fuites 85 est ménagé dans le cylindre 35 et qu'un passage existe entre l'alésage interne du cylindre 35 et ledit canal, ledit passage étant disposé au niveau de l'espace libre présent au repos entre la saillie 75 et le piston 36.

Lorsque l'embrayage est engagé, le piston principal 36 est en butée sur l'anneau 71, la soupape 39 étant ouverte sous l'action du ressort 37 par l'intermédiaire de la queue 82 prenant appui sur le corps 41. Bien entendu, la position de l'anneau 71 est choisie en conséquence pour que cette ouverture ait lieu.

Les chambres 72 et 73 sont alors à la pression atmosphérique et permettent au piston secondaire 38 rattrapeur d'usure de refouler de l'huile de la chambre 72 à la chambre 73 vers la bâche, ceci proportionnellement à l'usure des garnitures du disque 4, sachant que lorsque celles-ci s'usent le plateau de pression se rapproche du couvercle. En variante une pression résiduelle peut exister pour un appui constant de la butée 8 sur le diaphragme 1.

Au début de l'opération de débrayage, la soupape 39 est ouverte et la pression de commande s'établit simultanément dans les chambres 72 et 73. Sous cette action le piston principal 36 se déplace et permet automatiquement à la soupape 39 de se fermer en isolant les deux chambres 72,73, sachant que l'effort de la timonerie vu par les pistons 36 et 38 est égal, et en tenant compte de la section du piston secondaire 38, la pression régnant dans la chambre 73 est un multiple de celle régnant dans la chambre 72 empêchant toutes ouvertures intempestives de la soupape 39.

Durant l'opération de débrayage, la pression dans la chambre 73 varie sous l'effet de l'électrovalve 52, et dans un premier temps le piston 36 se déplace à l'encontre de l'action exercée par le ressort de rappel 37 jusqu'à ce qu'il vienne buter contre la saillie 75. Le ressort 33, disposé en série avec le ressort 37, étant faiblement comprimé compte tenu que sa raideur est choisie supérieure à celle du ressort 37.

Après venue en butée du piston 36 contre la saillie 75, celui-ci entraîne la pièce de transfert 34 et comprime le ressort de désensellement 33 jusqu'à ce que la collerette de la pièce 34 adjacente à la base du cylindre 35 vienne en appui contre la butée de la pièce 32.

Bien entendu, le diamètre interne du rebord 91 de la pièce épaulée 31 est choisi, en sorte que la pièce de transfert 34 puisse se déplacer sans interférer avec ledit rebord.

Ainsi qu'on l'aura compris, le tarage des ressorts 37 et 33 dépend des applications et on peut utiliser différentes stratégies pour passer de la position embrayage engagé à la position embrayage désengagé et vice versa, grâce au calcultateur 60 programmé en conséquence pour délivrer un courant approprié à l'électrovalve 52.

La distance entre la butée 75 et le piston 36 dépend elle aussi des applications, notamment de la courbe du diaphragme 7 pour attaque en différé du ressort 33 et formation des moyens d'entraînement à jeu selon l'invention.

On appréciera dans tous les cas la compacité axiale de l'actionneur 30, grâce notamment à la pièce de transfert 34.

Bien entendu la présente invention n'est pas limitée à l'exemple de réalisation décrit. En particulier, au lieu d'une soupape 39 on peut utiliser un clapet propre à coopérer avec une tige traversant le fond 79 et solidaire du corps 41.

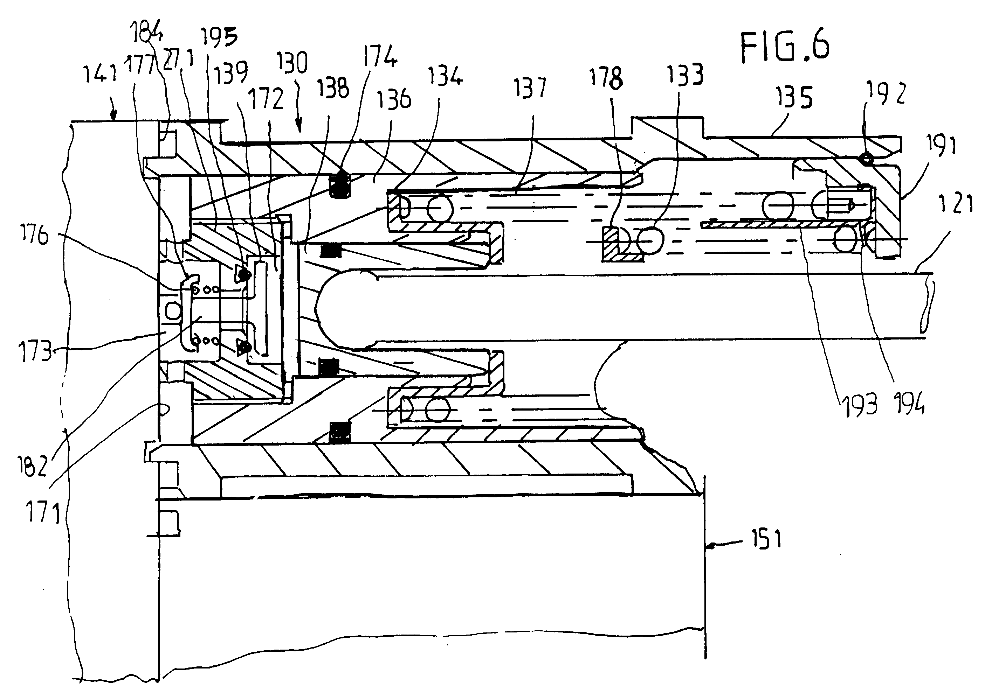

En variante (figure 6) l'enveloppe et le cylindre principal peuvent ne constituer qu'une seule et même pièce. Plus précisément, dans cette figure 6 les éléments communs avec ceux de la figure 5 portent les mêmes références augmentées de 100.

Ainsi le piston principal 136 est creusé et porte la pièce de transfert 134 sur laquelle s'appuie les moyens élastiques de rappel 137. Ces moyens élastiques 137 sous forme d'un ressort à boudin entourent les moyens élastiques de désensellement 133 et s'appuient à leur autre extrémité sur un épaulement 191 solidaire axialement du cylindre 135 par l'intermédiaire d'un jonc fendu 192 engagé dans une gorge du cylindre 135.

Cet épaulement 191 porte une pièce 193 dotée d'une patte de retenue 194 pour montage des moyens élastiques de désensellement 133, sous forme d'un ressort à boudin. L'autre extrémité de ce ressort 133 s'appuie sur la pièce d'appui 178 en forme de cornière.

Ainsi qu'on l'aura compris les ressorts 133,137 sont montés ici en parallèle, l'équipage piston secondaire 138-piston principal 136 étant propre à venir en contact avec la pièce d'appui 178, avec interposition de la pièce de transfert 134, au bout d'un déplacement axial déterminé en fonction des points P1 et P2 de la courbe 4 pour formation des moyens d'entraînement à jeu selon l'invention. La pièce de transfert 134 est entraînée à translation par le piston principal 136 pour actionner les moyens élastiques de désensellement après une course prédéterminée.

Une pièce 271 est rapportée ici par vissage sur le piston 136, ladite pièce délimitant la chambre de commande 173 et la chambre de rattrapage d'usure 172 en ayant en section globalement la forme d'un H.

La partie centrale du H est trouée pour passage de la queue 182 de la soupape 139 propre à venir en appui à étanchéité contre un siège 195 formé à la faveur d'un anneau rapporté dans une gorge de la partie centrale du H de la pièce 271. Cette pièce 271 constitue donc le fond du piston 136.

L'extrémité de cette pièce 271 est propre à coopérer, en position embrayage engagé, avec le fond du cylindre 135 constitué par le corps 141. La butée 171 est donc portée par le cylindre 135 en étant formée par le corps 141.

On notera que la pièce 271 possède quatre trous pour communication de la chambre 173 avec le retour 184 à la bâche, lorsque l'actionneur n'est pas en position embrayage engagé et ce au-delà d'une certaine course. Un passage d'alimentation est également prévu.

La coupelle 177 est portée par la queue 182 à distance de l'extrémité libre de celle-ci pour montage du ressort 176.

Ce dispositif fonctionne de la même manière que celui de la figure 5. Néanmoins, on notera que le réceptacle 151 de l'électrovalve 152 est placé à côté du cylindre 135, d'un même côté par rapport au corps 141 formant une semelle. La taille axiale de l'actionneur est ainsi réduite par rapport à la figue 5.

L'électrovalve 152 est du type à battement et utilise un solénoïde de commande 300 alimentée par le calculateur 60 de la figure 2 selon un rapport cyclique qui commute une soupape 301 d'une position ouverte à une position fermée, suivant le rapport cyclique.

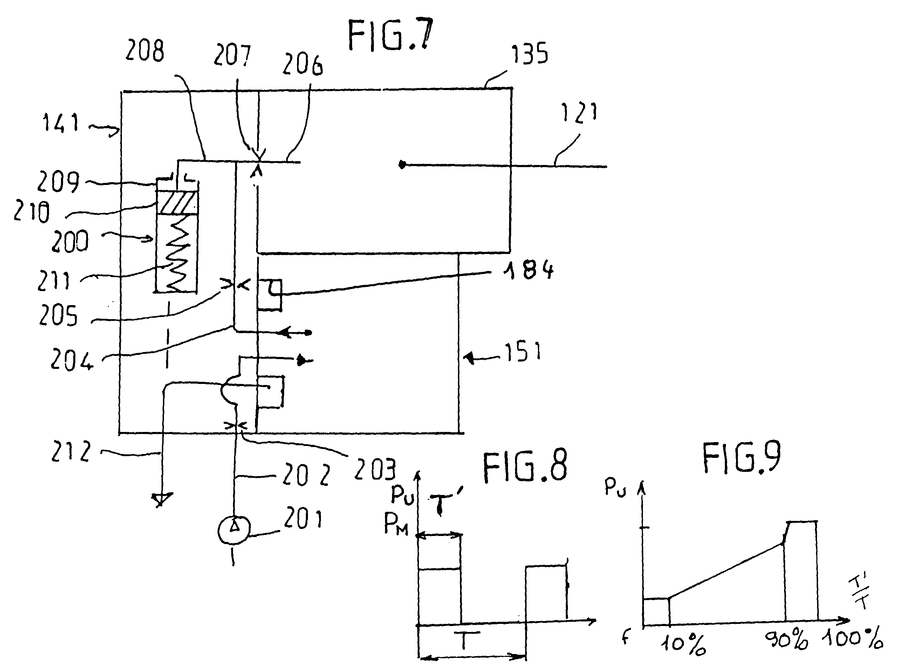

A la figure 10 la soupape 301 est propre à coopérer avec un siège 302, un canal de transfert 303 étant prévu pour communication avec la canalisation 212 (figure 7) de retour au réservoir.

Le canal 303 présente une restriction 304 et est relié à un canal d'utilisation 204 alimenté à la pression Pu.

La valve 152 présente en outre un tiroir 305 monté dans un alésage 306. Le tiroir 305 est soumis à l'action d'un ressort 307 pour obturer le canal 303. L'alésage 306 est doté de trois gorges respectivement reliées avec une canalisation d'arrivée 202 à la pression Pa, avec la canalisation d'utilisation 204 et à la canalisation 212 à la faveur d'une gorge 308 délimitée par le siège 302.

Le tiroir présente une portion centrale de diamètre réduit, ses portions terminales étant propres à recouvrir et à découvrir les gorges.

L'extrémité avant du tiroir 305 est propre à fermer plus ou moins le canal 303.

Ainsi la soupape 301, pour une période T prédéterminée, est ouverte pendant le temps T' (figure 8).

On obtient la valeur de la courbe caractéristique de la pression utile en fonction du rapport cyclique (T'/T) selon la courbe de la figure 9. On appréciera en se reportant au document DE-A-2124948, que la valve 152 permet de s'affranchir d'un montage avec des pistons agencés en tandem et donc de réduire la taille transversale de l'actionneur.

Suivant une autre caractéristique de l'invention, on profite de la configuration du corps 141 pour loger dans celui-ci un amortisseur de vibrations 200. Plus précisément, le circuit hydraulique comporte une pompe 201 avec une canalisation d'arrivée 202 dans la valve 152. A la sortie de l'électrovalve 152, le liquide ressort par la canalisation d'utilisation 204 qui elle-même se divise en une canalisation 206 alimentant la chambre de commande 173 et une canalisation 208 débouchant dans un cylindre 209 dans lequel est monté un piston 210 soumis à l'action d'un ressort 211 s'appuyant sur le fond du cylindre 209.

Le fond du cylindre 209 est en communication avec la canalisation 212 de retour au réservoir. On notera la présence de trois restrictions 203,205,207 respectivement au niveau des canalisations, 202,204,206.

Ainsi la restriction 207 est reliée à la chambre de commande 173 et il en est de même de la canalisation 208 d'alimentation du cylindre 209, ladite canalisation 208 étant reliée à la chambre 173, par l'intermédiaire de la restriction 207.

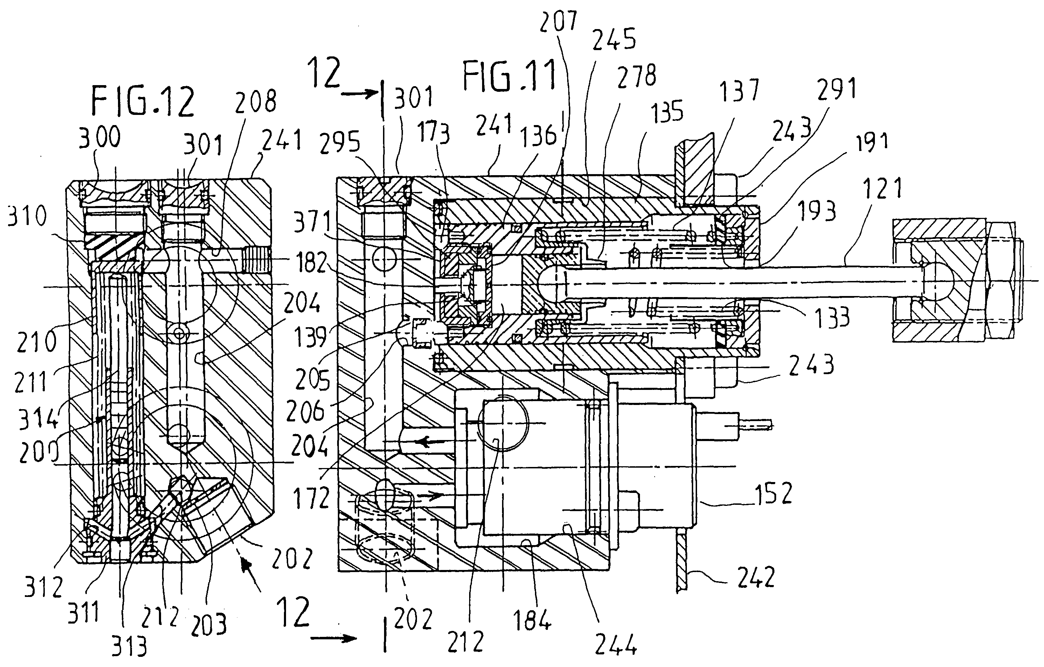

Grâce à ces dispositions et à l'amortisseur 200, on filtre les vibrations dues au battement de l'électrovalve 152, ce qui permet avantageusement d'éliminer les bruits au niveau de la butée de débrayage 8, bruit provoqué par les vibrations de la timonerie notamment de la tige 121 reliée au piston secondaire 138, qui vibrerait sans la présence de l'amortisseur 200, et notamment de la restriction 207. Bien entendu la charge du ressort 211 et du piston 210 est choisie en conséquence. Le piston peut être pourvu d'un bloc amortisseur comme visible dans les figures 11 et 12. Dans celles-ci les éléments communs à ceux de la figure 7 seront affectés des mêmes signes de références.

Dans ces figures le corps d'alimentation 241 est conformé pour former un réceptacle cylindrique 245 pour le cylindre principal 135 à l'intérieur duquel coulisse le piston principal 136 portant la pièce de transfert référencée ici en 234. Le piston 136 est creusé pour ce faire et entraîne à translation la pièce de transfert 234.

Cette pièce 234 est prolongée axialement vers l'épaulement 191 et présente un nez tubulaire 278 de forme tronconique pour formation de la pièce d'appui propre à venir en contact avec le ressort de désensellement 133. la pièce d'appui 278 est donc monobloc avec la pièce de transfert et actionne le ressort de désensellement après une course prédéterminée.

On notera que le ressort de rappel, monté en parallèle avec le ressort 133, s'appuie sur l'épaulement 191 avec interposition d'une butée élastique 291, pour diminuer les bruits engendrés par les chocs.

Le corps 241 est fixé au niveau de l'extrémité libre du cylindre 135 sur un support fixe 242 par des vis 243. On notera que le cylindre 135 est épaulé et est ainsi bloqué de manière étanche entre le support 242 et le corps 241. L'usinage du corps 241 n'a pas besoin d'être précis, la précision étant réalisée sur le cylindre principal rapporté.

Le corps 241 constitue également un réceptacle cylindrique 244 en dessous du cylindre principal pour montage étanche de la valve 152 ici par vissage.

C'est donc dans le corps unique 241 que sont pratiqués les différents canaux 204, 206, 208, monté l'amortisseur de vibration 200 avec le piston 210, le cylindre 209 de la figure 7 et sont logées les rectrictions 203, 205, 207. La gorge 184 est également pratiquée dans le corps 241, dans la portion 244 de celui-ci

Ces différents canaux sont pratiqués aisément par perçage dans le corps 241 avec fermeture par des bouchons étanches 400, 401. Pour plus de précision on se reportera aux figures 11 et 12.

La rectriction 203 est constituée par un anneau avec un trou central calibré, la restriction 205 est en liaison avec la chambre de commande 173 et est de forme cylindrique creuse avec un trou calibré central.

La restriction 207 est de forme analogue à la restriction 205 en étant solidaire d'une pièce 371 portant la soupape 139 et son siège 295.

Cette pièce 371, comme celle de la figure 6, est vissée dans le piston 136 et immobilise la restriction 207 en appui contre un épaulement du piston 136.

La restriction 207 est en communication avec la chambre d'usure 172 et sert d'appui au ressort associé à la soupape 139, lequel sollicite la soupape en direction d'une pièce en matière élastique 295 traversée par la queue 182 de la soupape et servant de siège à la soupape 139 de forme tronconique. Une bonne étanchéité est ainsi obtenue.

Le piston 210 est monté mobile dans le cylindre 209 réalisé par perçage vertical dans le socle du corps 241. Ce piston 210 est creux et porte un bloc amortisseur 310 annulaire et de section en forme de T. Le ressort 211, ici à boudins, prend appui sur l'une de ses extrémités sur le fond du piston 210 et à l'autre de ses extrémités sur une pièce de fermeture 311 fermant de manière étanche le cylindre 209 à sa base. Cette pièce 311 est dotée de canaux d'alimentation transversaux 312 reliés à un canal 313 du corps 241. Ce canal 313 est en relation avec le conduit de retour 212. La pièce 311 est centralement creuse et présente une cheminée pour montage à translation d'une tige 314 prenant appui sur le piston.

Le bloc 310 en matière élastique est propre à prendre appui sur le bouchon 400.

L'alimentation du cylindre 209 se fait au niveau de la base du bloc amortisseur 310 au-dessus du piston 210.

Grâce à la tige 314, mobile par rapport à la pièce 311 et soumise à sa base, le piston est soumis à une contre-réaction. Les oscillations du piston 210 sont donc amorties au bénéfice d'un bon fonctionnement de l'actionneur et les bruits diminués grâce au bloc 310. L'amortisseur de vibrations 200 est donc très efficace.

On appréciera la forme du corps 241 avec un fond doté des différents perçages et les réceptacles 244, 245 saillant axialement. L'actionneur est donc compact et facilement usinable notamment par perçage.

On notera également que la localisation des restrictions 205 et 207 simplifie l'actionneur, la restriction 205 étant montée dans la canalisation 206 et la restriction 207 entre les chambres de commande 173 et d'usure 172.

## Revendications

1. Actionneur du type à fluide pour la commande d'un embrayage à friction doté d'un dispositif débrayeur (7), notamment pour véhicule automobile, dont l'état est modifié entre une position embrayage (10) engagé et une position embrayage (10) désengagé, par l'intermédiaire de l'actionneur (30) actionnant une timonerie (20) propre à agir sur l'embrayage (10), du genre comportant un cylindre principal fixe (35,135), un cylindre mobile formant piston principal (36,136) et définissant avec ledit cylindre principal une chambre de commande (73,173), un piston secondaire (38,138), d'une part, relié à la timonerie (20) pour actionner celle-ci et modifier l'état de l'embrayage et, d'autre part, logé au sein du piston principal (36,136) pour définir avec celui-ci une chambre de rattrapage d'usure (72,172), un obturateur (39,139) porté par ledit piston principal et interposé entre les chambres de commande (73) et de rattrapage d'usure (72), pour établir une communication entre la chambre de commande (73,173) et la chambre de rattrapage d'usure (72,172) lorsque l'embrayage est en position embrayage engagé, et des premiers moyens élastiques, dits moyens élastiques de rappel (37,137), sollicitant le piston principal (36,136) en direction d'une butée (71,171) solidaire du cylindre principal (35,135) pour, en position embrayage engagé, ouvrir l'obturateur (39,139), caractérisé en ce que ledit actionneur à fluide (30,130) est un actionneur pour la commande d'un embrayage à friction doté d'un diaphragme (7) appartenant au dispositif débrayeur (7), en ce qu'il porte des seconds moyens élastiques, dits moyens élastiques de désensellement (33,133), associés audit diaphragme (7) de l'embrayage) pour action différée sur l'équipage mobile piston principal (36,136) - piston secondaire (38,138), par intervention de moyens d'entraînement à jeu (75,36-134,178) entre lesdits moyens élastiques de désensellement (33,133) et l'équipage mobile piston principal (36,136) - piston secondaire (38,138), le jeu desdits moyens d'entraînement à jeu et desdits seconds moyens élastiques étant dimensionnés en fonction de la courbe caractéristique du diaphragme (7).

2. Actionneur selon la revendication 1, caractérisé en ce que les premiers moyens élastiques de rappel (37,137) ont une charge inférieure à celle des seconds moyens élastiques de désensellement (33,133).

3. Actionneur selon la revendication 1 ou 2, caractérisé en ce que les moyens d'entraînement à jeu (75,36-134,178,278) comportent une pièce de transfert (34,134,234) coulissante propre à être entraînée à translation par le piston principal (36,136), l'équipage mobile piston principal (36,136) - piston secondaire (38,138) étant propre à actionner les moyens élastiques de désensellement (33,133) après une course prédéterminée.

4. Actionneur selon la revendication 3, caractérisé en ce que les moyens d'entraînement à jeu comportent également une pièce d'appui (78,178,278), l'équipage mobile piston principal (36,136) - piston secondaire (38,138) étant propre à actionner les moyens élastiques de désensellement (33,133), par l'intermédiaire de ladite pièce d'appui et de ladite pièce de transfert (34,134), après une course déterminée.

5. Actionneur selon la revendication 3 ou 4, caractérisé en ce que les moyens élastiques de désensellement (33) sont montés en série avec les moyens élastiques de rappel (37), en ce que la pièce de transfert (34) sert d'appui aux moyens élastiques de désensellement (33) prenant appui également sur un épaulement (91) solidaire du cylindre principal (35) et en ce que la pièce de transfert (34) porte la pièce d'appui (78).

6. Actionneur selon la revendication 5, caractérisé en ce que le cylindre principal (35,135) porte, d'une part, à son extrémité avant, la pièce d'appui coulissante (78), par l'intermédiaire de la pièce de transfert (34) et, d'autre part, dans son alésage interne une butée (71), et en ce que les moyens élastiques de rappel (37) sont propres à prendre appui sur ladite pièce d'appui (78) et sur le piston principal (36), pour sollicitation de celui-ci en drection de ladite butée (71) et ouverture de l'obturateur (39).

7. Actionneur selon la revendication 6, caractérisé en ce que la pièce d'appui (78) est montée coulissante par rapport au cylindre principal (35) par l'intermédiaire de la pièce de transfert (34) montée coulissante sur la périphérie externe du cylindre principal (35), en ce que les moyens élastiques de désensellement (33) et de rappel (37) consistent en des ressorts à boudin et en ce que ledit ressort de désensellement entoure ledit ressort de rappel monté dans l'alésage interne du piston principal (36) .

8. Actionneur selon la revendication 7, caractérisé en ce que le cylindre principal (35) présente une base élargie, et en ce que la pièce de transfert (34) présente à chacune de ses extrémités respectivement une collerette dirigée à l'opposé de l'axe de l'ensemble, pour coopération avec ladite base du cylindre principal (35) et appui du ressort à boudin de désensellement (33), et une collerette dirigée vers l'axe de l'ensemble, pour assemblage avec la pièce d'appui (78).

9. Actionneur selon la revendication 3 ou 4, caractérisé en ce que les moyens élastiques de rappel (137) sont montés en parallèle avec les moyens élastiques de désensellement (133), et en ce que le piston principal (136) est creusé et porte une pièce de transfert (134) sur laquelle s'appuient les moyens élastiques de rappel (137), dont son autre extrémité s'appuie sur un épaulement (191) solidaire axialement du cylindre principal (135).

10. Actionneur selon la revendication 9, caractérisé en ce que ledit épaulement (191) porte une pièce (193) dotée d'une patte de retenue (194) pour montage des moyens élastiques de désensellement (133) sous forme d'un ressort à boudin entouré par les moyens élastiques de rappel (137) sous forme également d'un ressort à boudin.

11. Actionneur selon l'une des revendications 1 à 10, caractérisé en ce que l'actionneur (30) comporte une électrovalve (52,152) programmée pour accomplir l'opération de débrayage-embrayage par commande du piston principal (36,136), ladite valve travaillant par commande en effort.

12. Actionneur selon la revendication 11, caractérisé en ce que l'électrovalve (152) est alimentée par un calculateur (60) recevant des informations provenant de capteurs, tels que des capteurs (61) de vitesse de rotation de l'arbre menant et mené de l'embrayage.

13. Actionneur selon la revendication 11 ou 12, dans lequel l'obturateur (39,139) comporte une tige ou queue (82,182), caractérisé en ce que ladite queue ou tige (82,182) est propre à prendre appui contre le fond du cylindre principal (35,135) défini par un bloc d'alimentation (41,141) doté de canalisations pour communication avec l'électrovalve (52,152).

14. Actionneur selon la revendication 13, caractérisé en ce que l'obturateur (39) constitue une soupape avec une tête propre à coopérer avec le fond (79)que présente le piston principal (36) et une queue (82) traversant ledit fond et solidaire d'une coupelle (77) propre à venir en appui contre un corps d'alimentation (41) délimitant la chambre de commande (73) avec interposition de moyens élastiques de rappel (76) entre ladite coupelle (77) et ledit fond (79).

15. Actionneur selon l'une quelconque des revendications précédentes, caractérisé en ce que l'actionneur (130) comporte un corps d'alimentation (141,241) en communication, d'une part, avec la chambre de commande (173) et, d'autre part, avec une électrovalve (152) de commande de la pression de la chambre de commande (173), et en ce que ledit corps (141,241) loge un amortisseur de vibrations doté d'un piston (210) monté dans un cylindre (209) et soumis à l'action d'un ressort (201) s'appuyant sur le fond dudit cylindre (209).

16. Actionneur selon la revendication 15, caractérisé en ce que l'électrovalve (152) est placée à côté du cylindre principal (135), d'un même côté du corps d'alimentation (141,241) formant une semelle, en ce que le cylindre (209) est en communication par une canalisation (208) avec une restriction (207) en communication avec la chambre de commande (173) et en ce que ladite restriction est en communication avec une canalisation d'utilisation (204) reliée à l'électrovalve (152).

## Patentansprüche

1. Hydraulischer oder pneumatischer Betätiger einer Reibungskupplung mit einer Ausrückvorrichtung (7), insbesondere für Kraftfahrzeuge, deren Zustand zwischen einer Position mit eingerückter Kupplung (10) und einer Position mit ausgerückter Kupplung (10) durch den Betätiger (30) verändert wird, der ein Gestänge (20) betätigt, das auf die Kupplung (10) einwirken kann, in der Ausführung mit einem feststehenden Hauptzylinder (35, 135), einem als Hauptkolben eingesetzten beweglichen Zylinder (36, 136) und einem zusammen mit dem besagten Hauptzylinder eine Betätigungskammer (73, 173) bildenden Nebenkolben (38, 138), der einerseits mit dem Gestänge (20) verbunden ist, um dieses zu betätigen und den Zustand der Kupplung zu verändern, und der andererseits im Innern des Hauptkolbens (36, 136) angeordnet ist, um zusammen mit diesem eine Verschleißausgleichkammer (72, 172) zu bilden, sowie mit einem Schließelement (39, 139), das an dem besagten Hauptkolben gelagert und zwischen der Betätigungskammer (73) und der Verschleißausgleichkammer (72, 172) eingefügt ist, um eine Verbindung zwischen der Betätigungskammer (73, 173) und der Verschleißausgleichkammer (72, 172) herzustellen, wenn sich die Kupplung in ihrer eingerückten Position befindet, und mit ersten elastischen Mitteln, die als elastische Rückstellmittel (37, 137) bezeichnet werden und den Hauptkolben (36, 136) in Richtung eines fest mit dem Hauptzylinder (35, 135) verbundenen Anschlags (71, 171) beansprucht, um in der Position mit eingerückter Kupplung das Schließelement (39, 139) zu öffnen , **dadurch gekennzeichnet,** daß der besagte hydraulische oder pneumatische Betätiger (30, 130) ein Betätiger für eine Reibungskupplung mit einer Membranfeder (7) ist, die zu der Ausrückvorrichtung (7) gehört, daß er zweite elastische Mittel trägt, die als elastische Entwölbungsmittel (33, 133) bezeichnet werden und mit der besagten Membranfeder (7) der Kupplung verbunden sind, um eine versetzte Wirkung auf die bewegliche Baugruppe aus Hauptkolben (36, 136) und Nebenkolben (38, 138) herbeizuführen, was unter Einfügung von mit Spiel wirksamen Mitnahmemitteln (75, 36-134, 178) zwischen den besagten elastischen Entwölbungsmitteln (33, 133) und der beweglichen Baugruppe aus Hauptkolben (36, 136) und Nebenkolben (38, 138) erfolgt, wobei die besagten mit Spiel wirksamen elastischen Mitnahmemittel und die besagten zweiten elastischen Mittel in Abhängigkeit von der Kennlinie der Membranfeder (7) dimensioniert sind.

2. Betätiger nach Anspruch 1 , **dadurch gekennzeichnet,** daß die ersten elastischen Rückstellmittel (37, 137) eine niedrigere Belastung als die zweiten elastischen Entwölbungsmittel (33, 133) aufweisen.

3. Betätiger nach Anspruch 1 oder 2 , **dadurch gekennzeichnet,** daß die mit Spiel wirksamen Mitnahmemittel (75, 36-134, 178, 278) ein gleitend geführtes Stellelement (34, 134, 234) umfassen, das durch den Hauptkolben (36, 136) in einer geradlinigen Bewegung mitgenommen werden kann, wobei die bewegliche Baugruppe aus Hauptkolben (36, 136) und Nebenkolben (38, 138) die elastischen Entwölbungsmittel (33, 133) nach einem vorbestimmten Verstellweg betätigen kann.

4. Betätiger nach Anspruch 3 , dadurch **gekennzeichnet,** daß die mit Spiel wirksamen Mitnahmemittel außerdem ein Auflageteil (78, 178, 278) umfassen, wobei die bewegliche Baugruppe aus Hauptkolben (36, 136) und Nebenkolben (38, 138) die elastischen Entwölbungsmittel (33, 133) über das besagte Auflageteil und das besagte Stellelement (34, 134) nach einem bestimmten Verstellweg betätigen können.

5. Betätiger nach Anspruch 3 oder 4 , **dadurch gekennzeichnet,** daß die elastischen Entwölbungsmittel (33) und die elastischen Rückstellmittel (37) hintereinander angeordnet sind, daß das Stellelement (34) als Auflage für die elastischen Entwölbungsmittel (33) dient, die außerdem an einer fest mit dem Hauptzylinder (35) verbundenen Schulter (91) zur Auflage kommen, und daß das Stellelement (34) das Auflageteil (78) trägt.

6. Betätiger nach Anspruch 5 , **dadurch gekennzeichnet,** daß der Hauptzylinder (35, 135) einerseits an seinem vorderen Ende das gleitend gelagerte Auflageteil (78) über das Stellelement (34) und andererseits in seiner Innenbohrung einen Anschlag (71) trägt und daß die elastischen Rückstellmittel (37) an dem besagten Auflageteil (78) und dem Hauptkolben (36) zur Auflage kommen können, um diesen in Richtung des besagten Anschlags (71) zu beanspruchen und das Schließelement (39) zu öffnen.

7. Betätiger nach Anspruch 6 , **dadurch gekennzeichnet,** daß das Auflageteil (78) gleitend im Verhältnis zum Hauptzylinder (35) über das Stellelement (34) gelagert ist, das wiederum gleitend am Außenumfang des Hauptzylinders (35) gelagert ist, daß die elastischen Entwölbungs- (33) und Rückstellmittel (37) aus Schraubenfedern bestehen und daß die besagte Entwölbungsfeder die besagte Rückstellfeder umgibt, die in der Innenbohrung des Hauptkolbens (36) gelagert ist.

8. Betätiger nach Anspruch 7 , **dadurch gekennzeichnet,** daß der Hauptzylinder (35) eine verbreiterte Grundfläche aufweist und daß das Stellelement (34) an jedem seiner Enden einen in entgegengesetzt zur Achse der Einheit gerichteten Kragen für das Zusammenwirken mit der besagten Grundfläche des Hauptzylinders (35) und die Auflage der Entwölbungsschraubenfeder (33) bzw. einen zur Achse der Einheit gerichteten Kragen für den Zusammenbau mit dem Auflageteil (78) aufweist.

9. Betätiger nach Anspruch 3 oder 4 , **dadurch gekennzeichnet,** daß die elastischen Rückstellmittel (137) parallel mit den elastischen Entwölbungsmitteln (133) angeordnet sind und daß der Hauptkolben (136) vertieft ausgeführt ist und ein Stellelement (134) trägt, auf dem die elastischen Rückstellmittel (137) zur Auflage kommen, deren anderes Ende an einer Schulter (191) aufliegt, die axial fest mit dem Hauptzylinder (135) verbunden ist.

10. Betätiger nach Anspruch 9 , **dadurch gekennzeichnet,** daß die besagte Schulter (191) ein Teil (193) mit einem Halteansatz (194) für den Einbau der elastischen Entwölbungsmittel (133) in Form einer Schraubenfeder trägt, die von den ebenfalls in Form einer Schraubenfeder ausgeführten elastischen Rückstellmitteln (137) umgeben ist.

11. Betätiger nach einem der Ansprüche 1 bis 10, **dadurch gekennzeichnet,** daß der Betätiger (30) ein programmiertes Magnetventil (52, 152) umfaßt, um den Aus- und Einrückvorgang durch Betätigung des Hauptkolbens (36, 136) auszuführen, wobei das besagte Magnetventil lastabhängig arbeitet.

12. Betätiger nach Anspruch 11 , **dadurch gekennzeichnet,** daß das Magnetventil (152) durch einen Rechner (60) gesteuert wird, der Informationen von Sensoren empfängt, etwa von Drehzahlgebern (61) für die treibende und getriebene Welle der Kupplung.

13. Betätiger nach Anspruch 11 oder 12, bei dem das Schließelement (39, 139) einen Stift oder Schaft (82, 182) umfaßt , **dadurch gekennzeichnet,** daß der besagte Schaft oder Stift (82, 182) am Boden des Hauptzylinders (35, 135) zur Auflage kommen kann, der durch einen Zuleitungsblock (41, 141) mit Leitungen für die Herstellung einer Verbindung mit dem Magnetventil (52, 152) gebildet wird.

14. Betätiger nach Anspruch 13, **dadurch gekennzeichnet,** daß das Schließelement (39) aus einem Ventil besteht, dessen Kopf mit dem Boden (79) des Hauptkolbens (36) zusammenwirken kann und dessen Schaft (82) durch den besagten Boden hindurchgeht und fest mit einem Teller (77) verbunden ist, der an einem Zuleitungskörper (41) zur Auflage kommen kann, der die Betätigungskammer (73) begrenzt, wobei elastische Rückstellmittel (76) zwischen dem besagten Teller (77) und dem besagten Boden (79) eingefügt sind.

15. Betätiger nach einem der vorangehenden Ansprüche, **dadurch gekennzeichnet,** daß der Betätiger (130) einen Zuleitungskörper (141, 241) umfaßt, der einerseits mit der Betätigungskammer (173) und anderseits mit einem Magnetventil (152) zur Regelung des Drucks der Betätigungskammer (173) in Verbindung steht, und daß der besagte Körper (141, 241) einen Schwingungsdämpfer mit einem Kolben (210) enthält, der in einem Zylinder (209) gelagert und der Einwirkung einer Feder (201) ausgesetzt ist, die am Boden des besagten Zylinders (209) anliegt.

16. Betätiger nach Anspruch 15 , **dadurch gekennzeichnet,** daß das Magnetventil (152) neben dem Hauptzylinder (135) auf der gleichen Seite wie der Zuleitungskörper (141, 241) angeordnet ist, der ein Fußstück bildet, daß der Zylinder (209) über einen Kanal (208) mit einer Verengung (207) in Verbindung steht, die wiederum mit der Betätigungskammer (173) in Verbindung steht, und daß die besagte Verengung mit einem Betriebskanal (204) in Verbindung steht, der mit dem Magnetventil (152) verbunden ist.

## Claims

1. A fluid-type actuator for controlling a friction clutch having a declutching device (7), in particular for a motor vehicle, in which the state of the clutch (10) is changeable between an engaged position and a disengaged position by means of the actuator (30) actuating a linkage (20) which is adapted to act on the clutch (10), being of the kind comprising a fixed main cylinder (35, 135), a movable cylinder constituting a main piston (36, 136) and defining, with the said main cylinder, a control chamber (73, 173), a secondary piston (38, 138) which is on the one hand coupled to the linkage (20) for actuating the latter and for changing the state of the clutch, and on the other hand mounted inside the main piston (36, 136) so as to define, with the latter, a wear compensating chamber (72, 172), an obturator (39, 139) carried by the said main piston and interposed between the control chamber (73) and the wear compensating chamber (72), so as to establish communication between the control chamber (73, 173) and the wear compensating chamber (72, 172) when the clutch is in the clutch engaged position, and first resilient means, referred to as resilient return means (37, 137), for urging the main piston (36, 136) towards a stop element (71, 171) fixed to the main cylinder (35, 135) so as, in the engaged position of the clutch, to open the obturator (39, 139), characterised in that the said fluid actuator (30, 130) is an actuator for controlling a friction clutch having a diaphragm (7) which is constituted in the declutching device (7), in that it carries second resilient means, referred to as resilient booster means (33, 133), which are associated with the said diaphragm (7) of the clutch for differential action on the combination of elements consisting of the movable main piston (36, 136) and the secondary piston (38, 138), through loose-coupled driving means (75, 36; 134, 178) interposed between the said resilient booster means (33, 133) and the combination of elements comprising the main piston (36, 136) and the secondary piston (38, 138), the free travel of the said loose-coupled driving means and the said second resilient means being of dimensions which are a function of the characteristic curve of the diaphragm (7).

2. An actuator according to Claim 1, characterised in that the first resilient return means (37, 137) exert a force smaller than that of the second resilient booster means (33, 133).

3. An actuator according to Claim 1 or Claim 2, characterised in that the loose-coupled driving means (75, 36; 134, 178, 278) include a transfer member (34, 134, 234) arranged for sliding movement and adapted to be driven in straight line motion by the main piston (36, 136), the combination of elements consisting of the main piston (36, 136) and the secondary piston (38, 138) being adapted to actuate the resilient booster means (33, 133) after a predetermined course of travel.

4. An actuator according to Claim 3, characterised in that the loose-coupled driving means further include a thrust member (78, 178, 278), the combination of elements comprising the movable main piston (36, 136) and the secondary piston (38, 138) being adapted to actuate the resilient booster means (33, 133), through the said thrust member and the said transfer member (34, 134), after a predetermined course of travel.

5. An actuator according to Claim 3 or Claim 4, characterised in that the resilient booster means (33) are mounted in series with the resilient return means (37), in that the transfer member (34) serves as an abutment for the resilient booster means (33), which also engage on a shoulder (91) fixed to the main cylinder (35), and in that the transfer member (34) carries the thrust member (78).

6. An actuator according to Claim 5, characterised in that the main cylinder (35, 135) carries, firstly, at its front end and through the interposed transfer member (34), the sliding thrust member (78), and secondly, a stop element (71) in its internal bore, and in that the resilient return means (37) are adapted to bear on the said thrust member (78) and on the main piston (36), so as to urge the latter towards the said stop element (71) and to open the obturator (39).

7. An actuator according to Claim 6, characterised in that the thrust member (78) is mounted for sliding movement with respect to the main cylinder (35), through the interposed transfer member (34) which is mounted for sliding movement on the outer periphery of the main cylinder (35), in that the resilient booster means (33) and the resilient return means (37) consist of coil springs, and in that the said booster spring surrounds the said return spring, which is mounted in the internal bore of the main piston (36).

8. An actuator according to Claim 7, characterised in that the main cylinder (35) has a widened base, and in that the transfer member (34) has at each of its ends, respectively, a collar portion directed away from the axis of the assembly for cooperation with the said base of the main cylinder (35), and for engagement by the booster coil spring (33), and a collar portion directed towards the axis of the assembly for assembly with the thrust member (78).

9. An actuator according to Claim 3 or Claim 4, characterised in that the resilient return means (137) are mounted in parallel with the resilient booster means (133), and in that the main piston (136) is of dished form and carries a transfer member (134) on which the resilient return means (137) bear, with its other end engaging on a shoulder (191) which is fixed axially to the main cylinder (135).

10. An actuator according to Claim 9, characterised in that the said shoulder (191) carries a member (193) which has a retaining lug (194) for mounting the resilient booster means (133), which are in the form of a coil spring surrounded by the resilient return means (137), the latter also being in the form of a coil spring.

11. An actuator according to one of Claims 1 to 10, characterised in that the actuator (30) includes a solenoid valve (52, 152) which is programmed so as to carry out the operation of disengaging and engaging the clutch by controlling the main piston (36, 136), the said valve working by controlling the force exerted.

12. An actuator according to Claim 11, characterised in that the solenoid valve (152) is supplied with power by a computer (60) which receives information signals from sensors, such as sensors (61) for the speed of rotation of the driving and driven shafts of the clutch.

13. An actuator according to Claim 11 or Claim 12, in which the obturator (39, 139) includes a stem or tail (82, 182), characterised in that the said tail or stem (82, 182) is adapted to bear against the base of the main cylinder (35, 135), defined by a supply manifold (41, 141) which is formed with ducts for communication with the solenoid valve (52, 152).

14. An actuator according to Claim 13, characterised in that the obturator (39) comprises a poppet valve having a head which is adapted to cooperate with the base (79) of the main piston (36), and a tail (82) extending through the said base and fixed to a cup element (77), which is adapted to come into engagement against a supply manifold body (41) which delimits the control chamber (73), with resilient return means (76) being interposed between the said cup element (77) and the said base (79).

15. An actuator according to any one of the preceding Claims, characterised in that the actuator (130) includes a supply manifold body (141, 241) which is in communication, firstly with the control chamber (173), and secondly with a solenoid valve (152) for controllling the pressure in the control chamber (173), and in that the said body (141, 241) accommodates a vibration damper having a piston (210) which is mounted in a cylinder (209) and which is subjected to the action of a spring (201) which bears on the base of the said cylinder (209).

16. An actuator according to Claim 15, characterised in that the solenoid valve (152) is located beside the main cylinder (135), on the same side of the supply manifold body (141, 241) which constitutes a support base, in that the cylinder (209) is in communication through a duct (208) with a restrictor (207) which is in communication with the control chamber (173), and in that the said restrictor is in communication with an operating duct (204) connected to the solenoid valve (152).
